# EUROPÄISCHE PATENTSCHRIFT

(11) **EP 3 401 545 B1**
(45) Veröffentlichungstag und Bekanntmachung des Hinweises auf die Patenterteilung: **27.11.2019**
(21) Anmeldenummer: 18174038.2
(22) Anmeldetag: 11.08.2017
(51) Int. Cl.: F04D 1/00, F04D 13/02, F04D 13/12, F04D 23/00, F02N 19/10, B60H 1/22

(54) **VON EINEM GEMEINSAMEN MOTOR ANGETRIEBENE SEITENKANALGEBLÄSE UND ZENTRIFUGALPUMPE, WOBEI DIE PUMPE MITTELS EINER MAGNETKOPPLUNG ANGETRIEBEN WIRD**
SIDE-CHANNEL BLOWER AND CENTRIFUGAL PUMP DRIVEN BY A COMMON MOTOR, WHEREIN THE PUMP IS DRIVEN VIA A MAGNETIC TRANSMISSION
VENTILATEUR À CANAL LATÉRAL ET POMPE CENTRIFUGE ENTRAÎNÉS PAR UN MOTEUR COMMUN, LA POMPE ÉTANT ENTRAÎNÉE PAR L'INTERMÉDIAIRE D'UNE TRANSMISSION MAGNÉTIQUE

(30) Priorität: 18.08.2016 DE 102016115368
(43) Veröffentlichungstag der Anmeldung: 14.11.2018
(62) Teilanmeldung aus: 17185865.7
(73) Patentinhaber: Eberspächer Climate Control Systems GmbH & Co. KG, 73730 Esslingen (DE)
(72) Erfinder: Jensen, Hans, 73265 Dettingen (DE); Humburg, Michael, 73035 Göppingen (DE)
(74) Vertreter: Ruttensperger Lachnit Trossin Gomoll

(56) Entgegenhaltungen:
- EP-A2- 1 696 129
- EP-A2- 2 028 373
- DE-A1- 19 652 970
- DE-C1- 10 111 005
- GB-A- 717 225
- JP-A- S62 165 594

## Beschreibung

Die vorliegende Erfindung betrifft eine Förderanordnung zum Bereitstellen zweier voneinander getrennt geführter Mediumströme, insbesondere bei einem brennstoffbetriebenen Fahrzeugheizgerät, umfassend ein zum Fördern eines ersten Mediums um eine erste Drehachse drehbares erstes Förderrad, ein zum Fördern eines zweiten Mediums um eine zweite Drehachse drehbares zweites Förderrad sowie einen Antriebsmotor zum Antreiben des ersten Förderrads und des zweiten Förderrads.

Eine derartige Förderanordnung ist beispielsweise aus der DE 20 2004 015 442 U1 bekannt. Bei dieser bekannten Förderanordnung wird ein als Elektromotor ausgebildeter Antriebsmotor genutzt, um zwei Förderräder eines brennstoffbetriebenen Fahrzeugheizgeräts anzutreiben. Ein erstes dieser Förderräder dient dazu, Verbrennungsluft als gasförmiges erstes Medium in einen Brennerbereich des Fahrzeugheizgeräts zu fördern. Ein zweites dieser Förderräder dient dazu, Heizluft als gasförmiges zweites Medium in Richtung zu einer Wärmetauscheranordnung des Fahrzeugheizgeräts zu fördern.

Eine Förderanordnung gemäß dem Oberbegriff des Anspruchs 1 ist aus der EP 1 696 129 A2 und aus der DE 101 11 005 C1 bekannt.

Es ist die Aufgabe der vorliegenden Erfindung, eine Förderanordnung zum Bereitstellen zweier voneinander getrennt geführter Mediumströme, insbesondere bei einem brennstoffbetriebenen Fahrzeugheizgerät, vorzusehen, bei welcher in einfacher Art und Weise eine zuverlässige Trennung der beiden Mediumströme bei gleichwohl ermöglichtem Antrieb zweier Förderräder durch einen gemeinsamen Antriebsmotor erreichbar ist.

Erfindungsgemäß wird diese Aufgabe gelöst durch eine Förderanordnung gemäß Anspruch 1.

Durch die Kopplung wenigstens eines Förderrads über eine Magnetkopplungsanordnung mit dem Antriebsmotor kann in Zuordnung zu diesem wenigstens einen Förderrad eine mechanische Kopplung, also eine direkte körperliche Wechselwirkung des Förderrads mit dem Antriebsmotor, vermieden werden. Die Magnetkopplungsanordnung ermöglicht die Ankopplung eines derartigen Förderrads über Magnetkraftwechselwirkung, so dass das Förderrad einerseits und der Antriebsmotor andererseits beispielsweise in durch zumindest eine Wandung voneinander getrennten Volumenbereichen vorgesehen sein können und in dieser Wandung keine Öffnung für den Hindurchgriff eines die Ankopplung des Förderrads bereitstellenden Organs, wie z. B. einer Welle des Antriebsmotors, vorgesehen sein muss.

Bei einer insbesondere bei Einsatz in einem Antriebssystem eines Fahrzeugs besonders vorteilhaften Variante ist erfindungsgemäß weiter vorgesehen, dass das erste Förderrad ein Gas-Förderrad zum Fördern eines gasförmigen ersten Mediums ist, und dass das zweite Förderrad ein Flüssigkeits-Förderrad zum Fördern eines flüssigen zweiten Mediums ist, und dass das zweite Förderrad mit dem Antriebsmotor über die Magnetkopplungsanordnung gekoppelt ist.

Zum Fördern von Verbrennungsluft als gasförmiges erstes Medium zu einem Brennerbereich eines brennstoffbetriebenen Fahrzeugheizgeräts hat sich ein Aufbau als besonders vorteilhaft erwiesen, bei welchem erfindungsgemäß vorgesehen ist, dass in Zuordnung zu dem ersten Förderrad in einem ersten Gehäuse ein um die erste Drehachse sich ringartig erstreckender, in Richtung der ersten Drehachse offener Förderkanal mit einem durch einen Unterbrecherbereich von einem Mediumeinlass getrennten Mediumauslass vorgesehen ist, und dass das erste Förderrad einen den Förderkanal axial überdeckenden, ringartigen Förderbereich mit einer Mehrzahl von in Umfangsrichtung um die erste Drehachse aufeinanderfolgenden Förderschaufeln umfasst. Hier ist also in Zusammenwirkung des Förderrads mit dem Förderkanal ein Förderbereich der Förderanordnung nach Art eines Seitenkanalgebläses aufgebaut.

Zum Fördern eines flüssigen zweiten Mediums ist erfindungsgemäß weiter vorgesehen, dass das zweite Förderrad in einem Strömungskanal für das zweite Medium um die zweite Drehachse drehbar getragen ist, wobei der Strömungskanal einen im Wesentlichen in Richtung der zweiten Drehachse auf das zweite Förderrad zu führenden Zuströmkanalbereich und einen in radialer Richtung von dem zweiten Förderrad weg führenden Abströmkanalbereich aufweist.

Um für das gasförmige erste Medium ein abgeschlossenes Strömungsvolumen bereitstellen zu können, wird vorgeschlagen, dass das erste Förderrad in einem von einem zweiten Gehäuse umschlossenen Raumbereich angeordnet ist, wobei vorzugsweise das zweite Gehäuse mit dem ersten Gehäuse zum Bereitstellen eines dichten Abschlusses fest verbunden ist.

Für eine definierte, stabile Positionierung des zweiten Förderrads zum Fördern des flüssigen zweiten Mediums kann vorgesehen sein, dass in dem Strömungskanal ein in Richtung der zweiten Drehachse sich erstreckender Lagerzapfen für das zweite Förderrad vorgesehen ist, wobei vorzugsweise der Lagerzapfen um die zweite Drehachse nicht drehbar, das zweite Förderrad drehbar lagernd vorzugsweise an dem zweiten Gehäuse getragen ist.

Der Antriebsmotor kann eine Rotoranordnung mit einer Rotorwelle umfassen. Bei derartiger Ausgestaltung ist vorzugsweise eines der Förderräder mit der Rotorwelle mechanisch gekoppelt, während das andere Förderrad mit der Rotorwelle über die Magnetkopplungsanordnung gekoppelt ist. Es ist hier darauf hinzuweisen, dass im Sinne der vorliegenden Erfindung mit einer mechanischen Kopplung zumindest jede keinen Schlupf zwischen dem Förderrad und der Rotorwelle zulassende Kopplung angesprochen ist, also beispielsweise eine durch Reibungsklemmsitz, durch verzahnungsartigen Eingriff, durch Materialschluss, wie z. B. Verklebung, generierte oder durch ein Getriebe bereitgestellte Kopplung.

Um die durch Magnetkraft generierte Ankopplung des wenigstens einen der Förderräder erreichen zu können, wird vorgeschlagen, dass der Antriebsmotor eine Rotoranordnung mit einer Rotorwelle umfasst, und dass die Magnetkopplungsanordnung eine mit der Rotorwelle mechanisch gekoppelte Antriebsmagnetanordnung und eine mit dem wenigstens einen über die Magnetkopplungsanordnung mit dem Antriebsmotor gekoppelten Förderrad gekoppelte Abtriebsmagnetanordnung umfasst. Vorzugsweise umfasst dabei wenigstens eine der Magnetanordnungen wenigstens einen Permanentmagneten.

Für einen einfachen, stabilen Aufbau kann vorgesehen sein, dass die Antriebsmagnetanordnung mit der Rotorwelle drehfest verbunden ist. Dabei kann eine direkte Kopplung der Antriebsmagnetanordnung mit der Rotorwelle oder/und eine Kopplung über das erste Förderrad vorgesehen sein.

Bei einer alternativen Ausgestaltung kann die Antriebsmagnetanordnung mit der Rotorwelle über eine Getriebeanordnung gekoppelt sein. Auf diese Art und Weise kann dafür gesorgt werden, dass die beiden Förderräder mit zueinander unterschiedlichen Drehzahlen rotieren können.

Die Getriebeanordnung kann ein Planetengetriebe umfassen, wobei das Planetengetriebe vorzugsweise ausgebildet sein kann mit einem mit der Rotorwelle zur gemeinsamen Drehung verbundenen Sonnenrad, einem mit der Antriebsmagnetanordnung zur gemeinsamen Drehung verbundenen oder durch die Antriebsmagnetanordnung bereitgestellten Planetenradträger mit einer Mehrzahl von mit dem Sonnenrad in Eingriff stehenden Planetenrädern und einem nicht um die erste Drehachse und die zweite Drehachse drehbaren und mit den Planetenrädern in Eingriff stehenden Hohlrad.

Bei einer baulich besonders einfach zu realisierenden Ausgestaltung kann das Hohlrad an dem zweiten Gehäuse vorgesehen sein.

Die erste Drehachse und die zweite Drehachse können einander entsprechen, so dass die beiden Förderräder tatsächlich um eine gemeinsame Drehachse zur Drehung angetrieben werden. Der Antriebsmotor ist vorzugsweise ein Elektromotor mit einer Statoranordnung, die eine oder mehrere Statorwicklungen aufweisen kann, und mit einer Rotoranordnung, die eine Rotorwelle aufweisen kann, über welche die Ankopplung an die Förderräder erfolgt.

Die vorliegende Erfindung betrifft ferner ein Antriebssystem für ein Fahrzeug, umfassend ein Antriebsaggregat, einen Kühlmediumkreislauf zum Leiten von flüssigem Kühlmedium durch das Antriebsaggregat und ein brennstoffbetriebenes Fahrzeugheizgerät mit einer erfindungsgemäßen Förderanordnung, wobei das zweite Förderrad zum Fördern von Kühlmedium des Kühlmediumkreislaufs als das zweite Medium zu einer Wärmetauscheranordnung des Fahrzeugheizgeräts vorgesehen ist und wobei das erste Förderrad zum Fördern von Verbrennungsluft als das erste Medium zu einem Brennerbereich des Fahrzeugheizgeräts vorgesehen ist.

Die Erfindung wird nachfolgend mit Bezug auf die beiliegenden Figuren detailliert beschrieben. Es zeigt:
- Fig. 1: eine Schnittdarstellung einer Förderanordnung zum Bereitstellen zweier voneinander getrennt geführter Mediumströme;
- Fig. 2: die Förderanordnung der Fig. 1 in Explosions-Schnittdarstellung;
- Fig. 3: eine der Fig. 1 entsprechende Ansicht einer alternativen Ausgestaltungsart der Förderanordnung;
- Fig. 4: die Förderanordnung der Fig. 3 in Explosions-Schnittdarstellung;
- Fig. 5: ein ein Planetengetriebe und eine Antriebsmagnetanordnung tragendes Gehäuse der Förderanordnung der Fig. 3;
- Fig. 6: eine Axialansicht des Gehäuses der Fig. 5 in Blickrichtung VI in Fig. 5;
- Fig. 7: eine Prinzipdarstellung eines Antriebssystems für ein Fahrzeug mit einem mit einer Förderanordnung der Fig. 1 bis 6 ausgestatteten Fahrzeugheizgerät.

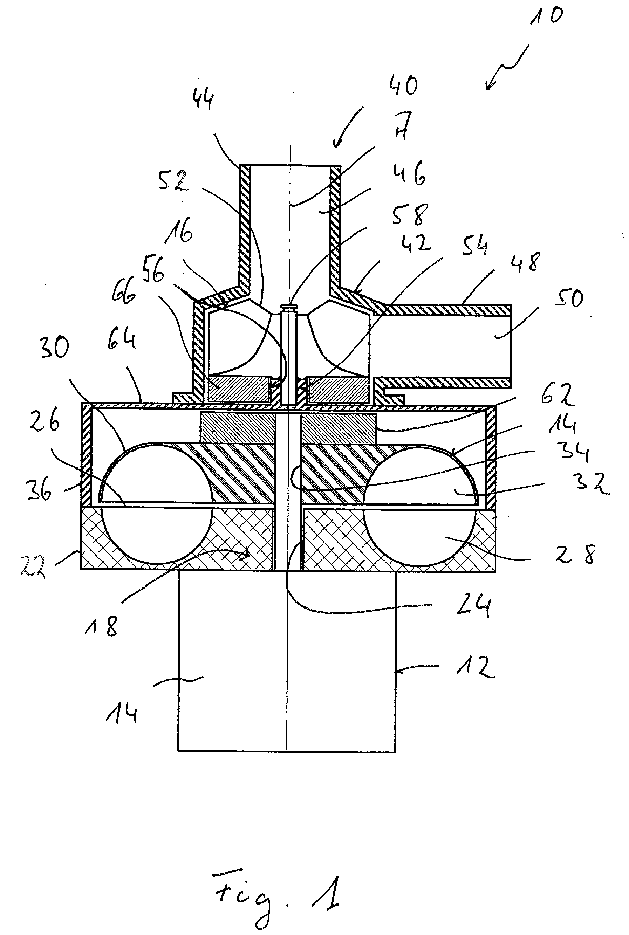

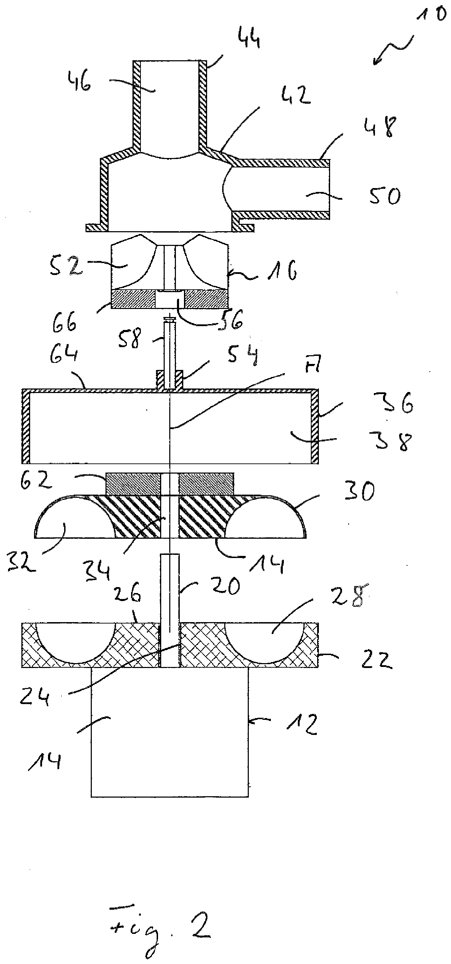

Die Fig. 1 und 2 zeigen eine erste Ausgestaltungsform einer allgemein mit 10 bezeichneten Förderanordnung. Die Förderanordnung 10 umfasst einen als Elektromotor ausgebildeten Antriebsmotor 12, durch welchen ein erstes Förderrad 14 und ein zweites Förderrad 16 zur Drehung um eine gemeinsame Drehachse A angetrieben werden können. Der Antriebsmotor 12 umfasst in einem Motorgehäuse 14 eine Statoranordnung mit einer oder mehreren elektrisch erregbaren Statorwicklungen und eine im Motorgehäuse 14 drehbare Rotoranordnung 18 mit einer Rotorwelle 20.

Das Motorgehäuse 12 ist mit einem ersten Gehäuse 22 der Förderanordnung 10 verbunden oder kann beispielsweise auch durch einen integralen Bestandteil des ersten Gehäuses 22 bereitgestellt sein. Im ersten Gehäuse 22 ist eine Öffnung 24 vorgesehen, durch welche die Rotorwelle 22 sich in Richtung der Drehachse A hindurch erstreckt, so dass sie an einer vom Motorgehäuse 12 abgewandten Axialseite 26 des ersten Gehäuses 22 über dieses hervorsteht.

Im ersten Gehäuse 22 ist ein um die Drehachse A sich ringartig erstreckender Förderkanal 28 ausgebildet. In einem nicht dargestellten Unterbrecherbereich ist der Förderkanal 28 in Umfangsrichtung unterbrochen. Durch den Unterbrecherbereich sind ein Mediumeinlass, über welchen ein durch das erste Förderrad 14 zu förderndes gasförmiges erstes Medium, also beispielsweise die Verbrennungsluft für ein brennstoffbetriebenes Fahrzeugheizgerät, in den Förderkanal 28 eintreten kann, und ein Mediumauslass, durch welchen das erste Medium den Förderkanal 28 wieder verlässt, in Umfangsrichtung voneinander getrennt. Das Förderrad 14 weist in Zuordnung zu dem ringartigen Förderkanal 28 einen entsprechend ringartig geformten Förderbereich 30 mit einer Mehrzahl von in Umfangsrichtung daran vorgesehenen und aufeinanderfolgenden Förderschaufeln 32 auf. Das Förderrad 14 bildet zusammen mit dem Förderkanal 28 einen nach Art eines Seitenkanalgebläses aufgebauten Förderbereich der Förderanordnung 10.

Die Rotorwelle 20 des Antriebsmotors 12 erstreckt sich in dem in den Fig. 1 und 2 dargestellten Beispiel durch eine im Förderrad 14 vorgesehene Öffnung 34 hindurch. Das Förderrad 14 ist mit der Rotorwelle 20 direkt, mechanisch zur gemeinsamen Drehung um die Drehachse A mit dieser verbunden. Beispielsweise kann die Rotorwelle 20 in der Öffnung 34 durch Presspassung aufgenommen sein. Auch ein verzahnungsartiger Eingriff bzw. eine feste, mechanische Verbindung durch Verklebung oder dergleichen ist möglich.

Das Förderrad 14 ist in einem von einem mit dem ersten Gehäuse 22 beispielsweise radial außerhalb des Förderrads 14 bzw. des Förderkanals 28 fest und fluiddicht verbundenen zweiten Gehäuse 36 umschlossenen Raumbereich 38 aufgenommen. An diesem zweiten Gehäuse 36 ist ein einen Strömungskanal 40 für ein flüssiges zweites Medium bereitstellendes Strömungskanalelement 42 fest und einen fluiddichten Abschluss bereitstellend getragen. Das Strömungskanalelement 42 stellt in einem ersten Rohrabschnitt 44 einen im Wesentlichen in Richtung der Drehachse A auf das zweite Förderrad 16 zu führenden Zuströmkanalbereich 46 bereit und stellt in einem zweiten Rohrabschnitt 48 einen im dargestellten Beispiel im Wesentlichen radial vom zweiten Förderrad 16 weg führenden Abströmkanalbereich 50 bereit. Das durch das zweite Förderrad 16 zu fördernde flüssige zweite Medium strömt über den Zuströmkanalbereich 46 in Richtung der Drehachse A auf das zweite Förderrad 16 zu und wird im Drehbetrieb des zweiten Förderrads 16 durch eine Mehrzahl von daran in Umfangsrichtung um die Drehachse A aufeinander folgenden Förderschaufeln 52 in den Abströmkanalbereich 50 gefördert.

An einem Gehäuseansatz 54 des zweiten Gehäuses 36 ist ein Lagerzapfen 58 für das zweite Förderrad 16 fest getragen. Beispielsweise kann der Lagerzapfen 58 in den Gehäuseansatz 54 eingepresst sein oder/und daran durch Materialschluss, beispielsweise Verklebung, fest gehalten sein. Auf dem Lagerzapfen 58 ist das zweite Förderrad 16 beispielsweise vermittels einer Gleitlagerung grundsätzlich frei drehbar getragen.

Um auch das nicht mechanisch mit dem Antriebsmotor 12 gekoppelte zweite Förderrad 16 durch den Antriebsmotor 12 zur Drehung um die Drehachse A antreiben zu können, ist eine allgemein mit 60 bezeichnete Magnetkopplungsanordnung vorgesehen. Diese umfasst eine mit der Rotorwelle 20 bzw. dem daran drehfest getragenen ersten Förderrad 14 zur gemeinsamen Drehung gekoppelte Antriebsmagnetanordnung 62 beispielsweise mit einem oder mehreren Permanentmagneten. Diese können beispielsweise in einem diese umschließenden Gehäuse aus Kunststoffmaterial oder dergleichen angeordnet sein. In dieses Gehäuse oder ggf. auch einen scheibenartig ausgebildeten Permanentmagneten greift die Rotorwelle 20 ein. Die Antriebsmagnetanordnung 62 kann somit beispielsweise durch Presspassung, Verklebung oder dergleichen mit der Antriebswelle 20 direkt drehfest verbunden sein, kann alternativ oder zusätzlich aber auch mit dem ersten Förderrad 14 drehfest verbunden sein. Die Antriebsmagnetanordnung 62 liegt in dem vom zweiten Gehäuse 36 umschlossenen Raumbereich 38 und ist somit durch das zweite Gehäuse 36, insbesondere eine auch den Gehäuseansatz 54 aufweisende Wandung 64 desselben vom zweiten Förderrad 16 und auch dem im Strömungskanalelement 42 gebildeten Strömungskanal 40 für das zweite Medium getrennt.

An dem zweiten Förderrad 16 ist eine Abtriebsmagnetanordnung 66 der Magnetkopplungsanordnung 60 vorgesehen. Auch diese kann einen oder mehrere beispielsweise in ein Gehäuse aus Kunststoffmaterial eingebetteten Permanentmagneten umfassen. Ein derartiges Gehäuse kann mit dem beispielsweise ebenfalls aus Kunststoffmaterial aufgebauten zweiten Förderrad 16 beispielsweise durch Verklebung oder dergleichen fest verbunden sein. Grundsätzlich könnten ein oder mehrere Permanentmagnete auch in das Aufbaumaterial des zweiten Förderrads 16 eingebettet oder unmittelbar am zweiten Förderrad 16 festgelegt sein. Der Lagerzapfen 58 und beispielsweise auch der Gehäuseansatz 54 durchsetzen eine Öffnung 56 in der Abtriebsmagnetanordnung 66, so dass das zweite Förderrad 16 sich beispielsweise axial am Gehäuseansatz 54 abstützend auf dem Lagerzapfen 58 drehbar getragen ist.

Durch die zwischen den beiden Magnetanordnungen 62, 66 wirkende Magnetkraft werden diese zur gemeinsamen Drehung verkoppelt, so dass bei Drehung der Rotorwelle 20 und dabei Drehung der Antriebsmagnetanordnung 62 auch die Abtriebsmagnetanordnung 66 zur Drehung um die Drehachse A angetrieben wird und damit auch das zweite Förderrad 16 um die Drehachse A rotiert. Somit besteht, ohne dass eine direkte, mechanische Verkopplung zwischen dem zweiten Förderrad 16 und dem Antriebsmotor 12 besteht, die Möglichkeit, dieses im Strömungskanal 40 für das flüssige zweite Medium anzuordnen und durch den Antriebsmotor 12, welcher auch das erste Förderrad 14 zur Drehung antreibt, zur Drehung um die Drehachse A anzutreiben. Dies ermöglicht einerseits eine zuverlässige Trennung der beiden Mediumströme, im dargestellten Beispiel insbesondere auch durch das zweite Gehäuse 36, stellt andererseits aber sicher, dass bei Erregen des Antriebsmotors 12 beide Förderräder 14, 16 zuverlässig zur Drehung um die Drehachse A angetrieben werden.

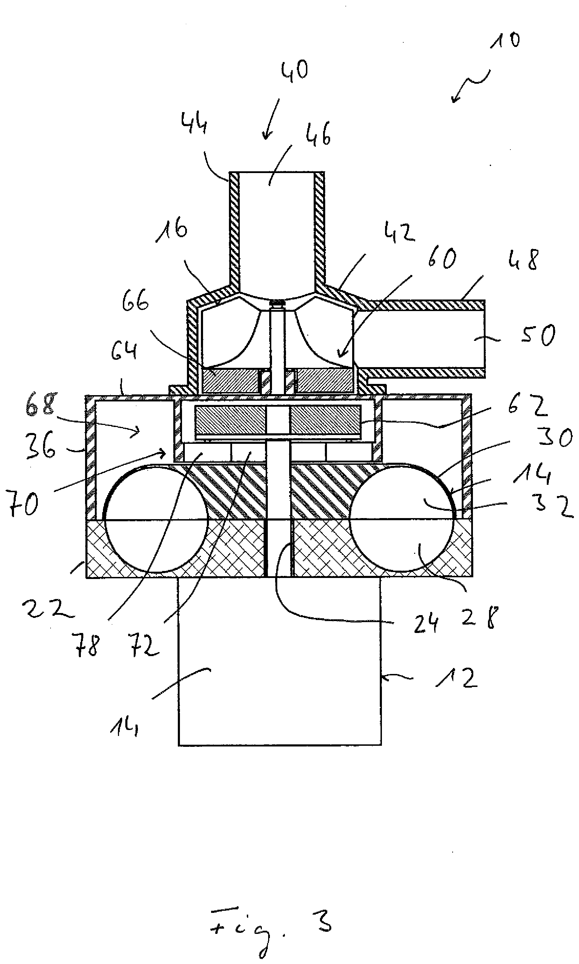

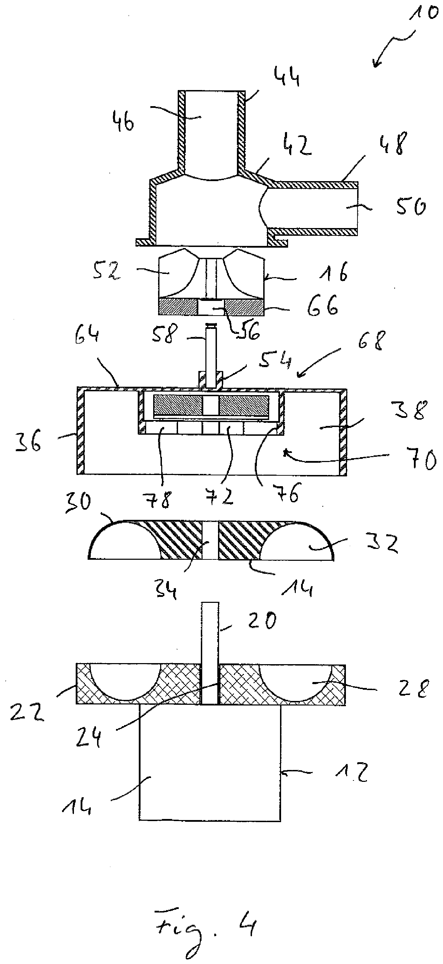

Eine alternative Ausgestaltungsform einer derartigen Förderanordnung ist in den Fig. 3 bis 6 dargestellt. Hier sind Komponenten oder Baugruppen, welche vorangehend beschriebenen Komponenten oder Baugruppen hinsichtlich ihres Aufbaus bzw. ihrer Funktion entsprechen, mit dem gleichen Bezugszeichen bezeichnet.

Auch bei dem in den Fig. 3 bis 6 dargestellten Aufbau ist das zweite Förderrad 16 über die Magnetkopplungsanordnung 60 mit dem Antriebsmotor 12 bzw. der Antriebswelle 20 desselben zur gemeinsamen Drehung um die Drehachse A gekoppelt. Auch hier weist die Magnetkopplungsanordnung 60 wieder die im Raumbereich 38 angeordnete Antriebsmagnetanordnung 62 und die zusammen mit dem zweiten Förderrad 16 im Strömungskanal 40 bzw. im Strömungskanalelement 42 aufgenommene Abtriebsmagnetanordnung 66 auf. Auch die Kopplung des ersten Förderrads 14 mit der Rotorwelle 20 des Antriebsmotors 12 und dessen Wechselwirkung mit dem Ringkanal 28 im ersten Gehäuse 22 ist so, wie vorangehend mit Bezug auf die Fig. 1 und 2 beschrieben.

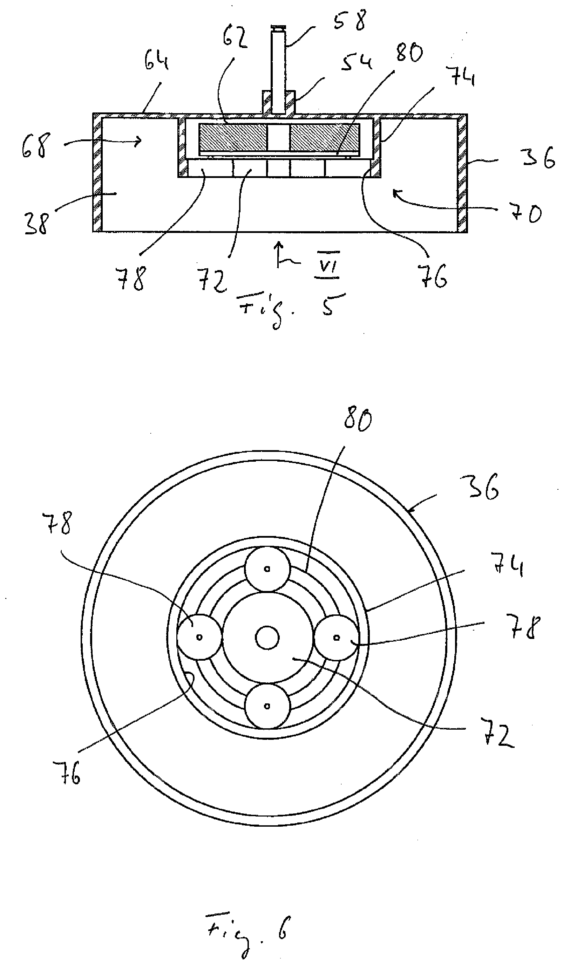

Anders als bei der vorangehend beschriebenen Ausgestaltungsform ist jedoch die Antriebsmagnetanordnung 62 nicht drehfest mit der Rotorwelle 20 verbunden, sondern ist mit dieser über eine allgemein mit 68 bezeichnete Getriebeanordnung verbunden bzw. ist durch die Rotorwelle 20 über die Getriebeanordnung 68 zur Drehung um die Drehachse A antreibbar. Im dargestellten Beispiel umfasst die Getriebeanordnung 68 ein Planetengetriebe 70 mit einem mit der Rotorwelle 20 oder/und dem ersten Förderrad 14 zur gemeinsamen Drehung fest verbundenen Sonnenrad 72. An dem zweiten Gehäuse 36 bzw. der Wandung 64 derselben ist ein im Wesentlichen in Richtung der Drehachse A in den Raumbereich 38 sich erstreckender, beispielsweise im Wesentlichen zylindrischer Ansatz 74 vorgesehen, der in seinem von der Wandung 64 entfernten Endbereich ein Hohlrad 76 bereitstellt. Zwischen dem Sonnenrad 72 und dem Hohlrad 76 sind im dargestellten Beispiel vier in Umfangsrichtung beispielsweise mit gleichmäßigem Abstand zueinander angeordnete Planetenräder 78 vorgesehen, welche sowohl mit dem Sonnenrad 72, als auch mit dem Hohlrad 76 in Kämmeingriff stehen. Die Planetenräder 78 sind an einem beispielsweise ringartig ausgebildeten Planetenradträger 80 um zur Drehachse A im Wesentlichen parallele Drehachsen frei drehbar getragen. Der Planetenradträger 80 wiederum ist an der Antriebsmagnetanordnung 62 festgelegt bzw. bildet einen Teil desselben, so dass bei Drehung des Planetenradträgers 80 um die Drehachse A sich entsprechend auch die Antiebsmagnetanordnung 62 um die Drehachse A dreht. Diese Drehung wird dadurch hervorgerufen, dass bei Drehung des Sonnenrads 72 um die Drehachse A aufgrund der drehfesten Anordnung des Hohlrads 76 am zweiten Gehäuse 36 die durch den Kämmeingriff mit dem Sonnenrad 72 in Drehung versetzten Planetenräder 78 auf dem Hohlrad 76 abrollen und bei dieser Abrollbewegung den Planetenradträger 80 zur Drehung um die Drehachse A antreiben. Bei dem in Fig. 6 dargestellten Ausgestaltungsbeispiel, bei welchem zwischen Hohlrad und Sonnenrad ein Durchmesserverhältnis bzw. Zähnezahlverhältnis von 2/1 vorgesehen ist, führt eine Drehung des Sonnenrads 72 mit vorbestimmter Drehzahl zu einer Drehung des zweiten Förderrads 16 in der gleichen Drehrichtung mit einer Drehzahl, die einem Drittel der Drehzahl des Sonnenrads und damit einem Drittel der Drehzahl des ersten Förderrads 14 bzw. der Rotorwelle 20 entspricht.

Durch die Dimensionierung der verschiedenen Komponenten des Planetengetriebes 70 wird es somit möglich, die Drehzahl für das zweite Förderrad 16 abweichend von der Drehzahl des ersten Förderrads 14 vorzugeben.

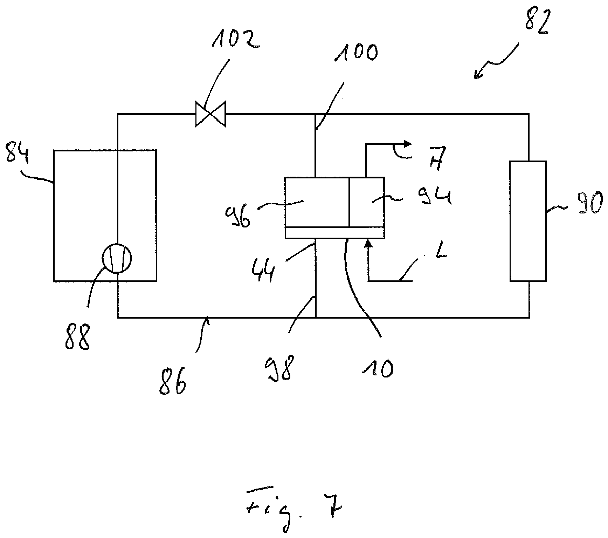

Mit Bezug auf die Fig. 7 wird nachfolgend anhand einer prinzipartigen Darstellung die Integration einer vorangehend beschriebenen Förderanordnung 10 in ein Antriebssystem eines Fahrzeugs erläutert. Dieses allgemein mit 82 bezeichnete Antriebssystem umfasst ein beispielsweise als Brennkraftmaschine ausgebildetes Antriebsaggregat 84 und in Zuordnung dazu einen auch durch einen Wassermantel des Antriebsaggregats 84 hindurchgeführten Kühlmediumkreislauf 86 für ein im Allgemeinen flüssiges Kühlmedium, also beispielsweise Wasser oder dergleichen. Das Kühlmedium kann im Kühlmediumkreislauf 86 durch eine Kühlmediumpumpe 88 zur Zirkulation angetrieben werden. Der Kühlmediumkreislauf 86 ist auch durch eine allgemein als Kühler bezeichnete Wärmetauscheranordnung 90 hindurchgeführt. Darin kann im Antriebsaggregat 84 generierte Wärme abgegeben werden, um das Kühlmedium bzw. das Antriebsaggregat 84 zu kühlen. Beispielsweise kann diese Wärme auf den Kühler 90 durchströmende und in einen Fahrzeuginnenraum einzuleitende Luft übertragen werden.

Das Antriebssystem 82 umfasst ferner ein allgemein mit 92 bezeichnetes brennstoffbetriebenes Fahrzeugheizgerät. Das Fahrzeugheizgerät 92 umfasst einen Brennerbereich 94 sowie eine Wärmetauscheranordnung 96. In Zuordnung zu dem Fahrzeugheizgerät 92 ist die vorangehend beschriebene Förderanordnung 10 vorgesehen. Der erste Rohrabschnitt 44 ist über eine Zweigleitung 98 an den Kühlmediumkreislauf 86 angebunden. Über eine weitere Zweigleitung 100 ist die Wärmetauscheranordnung 96 ebenfalls an den Kühlmediumkreislauf 86 angebunden, so dass die Wärmetauscheranordnung 96 im Kühlmediumkreislauf 86 im Wesentlichen parallel zum Kühler 90 bzw. auch zum Antriebsaggregat 84 geschaltet ist. Nicht erkennbar ist in Fig. 7 der zweite Rohrabschnitt 48 der Förderanordnung 10, welcher das durch das zweite Förderrad 16 geförderte flüssige Medium, also das Kühlmedium des Kühlmediumkreislaufs 86, in die Wärmetauscheranordnung 96 leitet.

Durch das erste Förderrad 14 wird die durch einen Pfeil L angedeutete Verbrennungsluft in Richtung zu dem Brennerbereich 94 gefördert, wird darin mit Brennstoff vermischt und wird im Brennerbereich 94 zur Bereitstellung von Wärme verbrannt. Die dabei entstehenden Abgase A verlassen den Brennerbereich 94 über ein nicht dargestelltes Abgasführungssystem.

Im Betrieb des Antriebssystems 7 kann bei laufendem Antriebsaggregat 84 die darin generierte Wärme über den Kühler 90 abgegeben werden. Ist ein Betrieb des Fahrzeugheizgeräts 92 nicht erforderlich, bleibt die Förderanordnung 10 deaktiviert, so dass aufgrund des im Vergleich zum Kühler 90 deutlich größeren Strömungswiderstandes die beiden Zweigleitungen 98, 100 im Wesentlichen nicht durchströmt werden und im Wesentlichen das gesamte im Kühlmediumkreislauf 86 zirkulierende Kühlmedium auch den Kühler 90 durchströmt. Soll beispielsweise in einem Standheizungsbetriebsmodus, also bei deaktiviertem Antriebsaggregat 84, der Fahrzeuginnenraum erwärmt werden, so kann das Fahrzeugheizgerät 92 in Betrieb genommen werden. In diesem Zustand wird auch die Förderanordnung 10 aktiviert, so dass einerseits das Kühlmedium des Kühlmediumkreislaufs 86 durch die Wärmetauscheranordnung 96 hindurch gefördert wird und andererseits durch das erste Förderrad 14 die Verbrennungsluft L in den Brennerbereich 94 eingespeist wird. Um dabei für eine definierte Durchströmung des Kühlers 90 zu sorgen, kann über ein Ventil 102 die Durchströmung des Antriebsaggregats 84 unterbunden werden. Wird das Ventil 102 in eine die Durchströmung zum Antriebsaggregat 84 freigebende Ventilstellung gebracht, so kann das in der Wärmetauscheranordnung 96 des Fahrzeugheizgeräts 92 erwärmte Kühlmedium auch das Antriebsaggregat 84 durchströmen und dieses vor Beginn des Betriebs vorwärmen. Um dabei beispielsweise dafür zu sorgen, dass durch das Fahrzeugheizgerät 92 nur das Antriebsaggregat 84 erwärmt wird, kann auch im Strömungsbereich zwischen dem Fahrzeugheizgerät 92 und dem Kühler 90 ein Ventil angeordnet sein, das in diesem Falle dann auf sperrend geschaltet wird, um dafür zu sorgen, dass die Kühleranordnung 90 nicht durchströmt wird, sondern das gesamte, die Wärmetauscheranordnung 96 durchströmende Kühlmedium das Antriebsaggregat 84 durchströmt. In diesem Zustand kann beispielsweise unterstützend auch die Kühlmediumpumpe 88 betrieben werden.

## Patentansprüche

1. Förderanordnung zum Bereitstellen zweier voneinander getrennt geführter Mediumströme, insbesondere bei einem brennstoffbetriebenen Fahrzeugheizgerät, umfassend:
- ein zum Fördern eines ersten Mediums um eine erste Drehachse (A) drehbares erstes Förderrad (14),
- ein zum Fördern eines zweiten Mediums um eine zweite Drehachse (A) drehbares zweites Förderrad (16),
- einen Antriebsmotor (12) zum Antreiben des ersten Förderrads (14) und des zweiten Förderrads (16),
wobei wenigstens ein Förderrad (16) mit dem Antriebsmotor (12) über eine Magnetkopplungsanordnung (60) gekoppelt ist, wobei das erste Förderrad (14) ein Gas-Förderrad zum Fördern eines gasförmigen ersten Mediums ist, und das zweite Förderrad (16) ein Flüssigkeits-Förderrad zum Fördern eines flüssigen zweiten Mediums ist, und wobei das zweite Förderrad (16) mit dem Antriebsmotor (12) über die Magnetkopplungsanordnung (60) gekoppelt ist,
**dadurch gekennzeichnet,**
**dass** in Zuordnung zu dem ersten Förderrad (14) in einem ersten Gehäuse (22) ein um die erste Drehachse (A) sich ringartig erstreckender, in Richtung der ersten Drehachse (A) offener Förderkanal (28) mit einem durch einen Unterbrecherbereich von einem Mediumeinlass getrennten Mediumauslass vorgesehen ist, und dass das erste Förderrad (14) einen den Förderkanal (28) axial überdeckenden, ringartigen Förderbereich (30) mit einer Mehrzahl von in Umfangsrichtung um die erste Drehachse (A) aufeinanderfolgenden Förderschaufeln (32) umfasst,
und
**dass** das zweite Förderrad (16) in einem Strömungskanal (40) für das zweite Medium um die zweite Drehachse (A) drehbar getragen ist, wobei der Strömungskanal (40) einen im Wesentlichen in Richtung der zweiten Drehachse (A) auf das zweite Förderrad (16) zu führenden Zuströmkanalbereich (46) und einen in radialer Richtung von dem zweiten Förderrad (16) weg führenden Abströmkanalbereich (50) aufweist.

2. Förderanordnung nach Anspruch 1, **dadurch gekennzeichnet, dass** das erste Förderrad (14) in einem von einem zweiten Gehäuse (36) umschlossenen Raumbereich (38) angeordnet ist, wobei vorzugsweise das zweite Gehäuse (36) mit dem ersten Gehäuse (22) zum Bereitstellen eines dichten Abschlusses fest verbunden ist, oder/und
dass in dem Strömungskanal (40) ein in Richtung der zweiten Drehachse (A) sich erstreckender Lagerzapfen (58) für das zweite Förderrad (16) vorgesehen ist, wobei vorzugsweise der Lagerzapfen (58) um die zweite Drehachse (A) nicht drehbar, das zweite Förderrad (16) drehbar lagernd vorzugsweise an dem zweiten Gehäuse (36) getragen ist.

3. Förderanordnung nach einem der vorangehenden Ansprüche, **dadurch gekennzeichnet, dass** der Antriebsmotor (12) eine Rotoranordnung (18) mit einer Rotorwelle (20) umfasst, und dass das erste Förderrad (14) mit der Rotorwelle (20) mechanisch gekoppelt ist und das zweite Förderrad (16) mit der Rotorwelle (20) über die Magnetkopplungsanordnung (60) gekoppelt ist.

4. Förderanordnung nach einem der vorangehenden Ansprüche, **dadurch gekennzeichnet, dass** der Antriebsmotor (12) eine Rotoranordnung (18) mit einer Rotorwelle (20) umfasst, und dass die Magnetkopplungsanordnung (60) eine mit der Rotorwelle (20) mechanisch gekoppelte Antriebsmagnetanordnung (62) und eine mit dem wenigstens einen über die Magnetkopplungsanordnung (60) mit dem Antriebsmotor (12) gekoppelten Förderrad (16) gekoppelte Abtriebsmagnetanordnung (66) umfasst.

5. Förderanordnung nach Anspruch 4, **dadurch gekennzeichnet, dass** die Antriebsmagnetanordnung (62) wenigstens einen Permanentmagneten umfasst, oder/und dass die Abtriebsmagnetanordnung (60) wenigstens einen Permanentmagneten umfasst.

6. Förderanordnung nach Anspruch 4 oder 5, **dadurch gekennzeichnet, dass** die Antriebsmagnetanordnung (62) mit der Rotorwelle (20) drehfest verbunden ist.

7. Förderanordnung nach Anspruch 4 oder 5, **dadurch gekennzeichnet, dass** die Antriebsmagnetanordnung (62) mit der Rotorwelle (20) über eine Getriebeanordnung (68) gekoppelt ist.

8. Förderanordnung nach Anspruch 7, **dadurch gekennzeichnet, dass** die Getriebeanordnung (68) ein Planetengetriebe (70) umfasst vorzugsweise mit einem mit der Rotorwelle (20) zur gemeinsamen Drehung verbundenen Sonnenrad (72), einem mit der Antriebsmagnetanordnung (62) zur gemeinsamen Drehung verbundenen oder durch die Antriebsmagnetanordnung (62) bereitgestellten Planetenradträger (80) mit einer Mehrzahl von mit dem Sonnenrad (72) in Eingriff stehenden Planetenrädern (78) und einem nicht um die erste Drehachse (A) und die zweite Drehachse (A) drehbaren und mit den Planetenrädern (78) in Eingriff stehenden Hohlrad.

9. Förderanordnung nach Anspruch 2 und Anspruch 8, **dadurch gekennzeichnet, dass** das Hohlrad (76) an dem zweiten Gehäuse (36) vorgesehen ist.

10. Förderanordnung nach einem der vorangehenden Ansprüche, **dadurch gekennzeichnet, dass** die erste Drehachse (A) der zweiten Drehachse (A) entspricht, oder/und dass der Antriebsmotor (12) ein Elektromotor mit einer Statoranordnung und einer Rotoranordnung (18) mit einer Rotorwelle (20) ist.

11. Antriebssystem für ein Fahrzeug, umfassend ein Antriebsaggregat (84), einen Kühlmediumkreislauf (86) zum Leiten von flüssigem Kühlmedium durch das Antriebsaggregat (84) und ein brennstoffbetriebenes Fahrzeugheizgerät (92) mit einer Förderanordnung (10) nach einem der vorangehenden Ansprüche, wobei das zweite Förderrad (16) zum Fördern von Kühlmedium des Kühlmediumkreislaufs (86) als das zweite Medium zu einer Wärmetauscheranordnung (96) des Fahrzeugheizgeräts (92) vorgesehen ist und wobei das erste Förderrad (14) zum Fördern von Verbrennungsluft (L) als das erste Medium zu einem Brennerbereich (94) des Fahrzeugheizgeräts (92) vorgesehen ist.

## Claims

1. Delivery device for providing two medium flows guided separately from one another, especially in a fuel-operated vehicle heater, comprising
- a first conveyor wheel (14) rotatable about a first rotation axis (A) for delivering a first medium,
- a second conveyor wheel (16) rotatable about a second rotation axis (A) for delivering a second medium, and
- a drive motor (12) for driving the first conveyor wheel (14) and the second conveyor wheel (16),
wherein at least one conveyor wheel (16) is coupled with the drive motor (12) via a magnetic coupling device (60), wherein the first conveyor wheel (14) is a gas conveyor wheel for delivering a gaseous first medium, and wherein the second conveyor wheel (16) is a liquid conveyor wheel for delivering a liquid second medium, and wherein the second conveyor wheel (16) is coupled with the drive motor (12) via the magnetic coupling device (60)
**characterized in that**
in association with the first conveyor wheel (14), a conveyor duct (28), which extends in a ring-shaped manner about the first rotation axis (A) and is open in the direction of the first rotation axis (A), is provided in a first housing (22), with a medium outlet separated from a medium inlet by an interrupter area, and that the first conveyor wheel (14) comprises a ring-shaped delivery area (30) axially covering the conveyor duct (28) with a plurality of delivery blades (32) following each other in the circumferential direction about the first rotation axis (A),
and
that the second conveyor wheel (16) is carried rotatably about the second rotation axis (A) in a flow duct (40) for the second medium, wherein the flow duct (40) has a feed duct area (46) leading towards the second conveyor wheel (16) essentially in the direction of the second rotation axis (A) and a discharge duct area (50) leading away from the second conveyor wheel (16) in the radial direction.

2. Delivery device in accordance with claim 1, **characterized in that** the first conveyor wheel (14) is arranged in a space area (38) enclosed by a second housing (36), wherein the second housing (36) is preferably connected permanently to the first housing (22) for providing a tight closure, or/and
that a bearing journal (58) extending in the direction of the second rotation axis (A) is provided for the second conveyor wheel (16) in the flow duct (40), wherein the bearing journal (58) is preferably carried on the second housing (36) such that it is preferably not rotatable about the second rotation axis (A) and it rotatably mounts the second conveyor wheel (16) preferably on the second housing (36).

3. Delivery device in accordance with one of the above claims, **characterized in that** the drive motor (12) comprises a rotor device (18) with a rotor shaft (20), and that the first conveyor wheel (14) is mechanically coupled with the rotor shaft (20), and that the second conveyor wheel (16) is coupled with the rotor shaft (20) via the magnetic coupling device (60).

4. Delivery device in accordance with one of the above claims, **characterized in that** the drive motor (12) comprises a rotor device (18) with a rotor shaft (20), and that the magnetic coupling device (60) comprises a drive magnet device (62) mechanically coupled with the rotor shaft (20) and a driven magnet device (66) coupled with the at least one conveyor wheel (16) coupled with the drive motor (12) via the magnetic coupling device (60).

5. Delivery device in accordance with claim 4, **characterized in that** the drive magnet device (62) comprises at least one permanent magnet, or/and that the driven magnet device (60) comprises at least one permanent magnet.

6. Delivery device in accordance with claim 4 or 5, **characterized in that** the drive magnet device (62) is nonrotatingly connected to the rotor shaft (20).

7. Delivery device in accordance with claim 4 or 5, **characterized in that** the drive magnet device (62) is coupled with the rotor shaft (20) via a transmission device (68).

8. Delivery device in accordance with claim 7, **characterized in that** the transmission device (68) comprises a planet gear (70), preferably with a sun wheel (72) connected to the rotor shaft (20) for joint rotation; with a pinion cage (80), which is connected to the drive magnet device (62) for joint rotation or is provided by the drive magnet device (62), with a plurality of planet gears (78) meshing with the sun wheel (72); and with a ring gear, which is rotatable about the first rotation axis (A) and the second rotation axis (A) and meshes with the planet gears (78).

9. Delivery device in accordance with claim 2 and claim 8 **characterized in that** the ring gear (76) is provided on the second housing (36).

10. Delivery device in accordance with one of the above claims, **characterized in that** the first rotation axis (A) corresponds to the second rotation axis (A), or/and that the drive motor (12) is an electric motor with a stator device and with a rotor device (18) with a rotor shaft (20).

11. Drive system for a vehicle, comprising a drive unit (84), a cooling medium circuit (86) for guiding liquid cooling medium through the drive unit (84) and a fuel-operated vehicle heater (92) with a delivery device (10) in accordance with one of the above claims, wherein the second conveyor wheel (16) is provided for delivering cooling medium of the cooling medium circuit (86) as the second medium to a heat exchanger unit (96) of the vehicle heater (92), and wherein the first conveyor wheel (14) is provided for delivering combustion air (L) as the first medium to a burner area (94) of the vehicle heater (92).

## Revendications

1. Agencement de transport pour fournir deux flux de médium guidés séparément les uns des autres, en particulier dans un dispositif de chauffage de véhicule fonctionnant au carburant, comprenant :
- une première roue de transport (14) pouvant tourner autour d'un premier axe de rotation (A) pour transporter un premier médium,
- une deuxième roue de transport (16) pouvant tourner autour d'un deuxième axe de rotation (A) pour transporter un deuxième médium, et
- un moteur d'entraînement (12) pour entraîner la première roue de transport (14) et la deuxième roue de transport (16),
où au moins une roue de transport (16) est couplée au moteur d'entraînement (12) via un dispositif de couplage magnétique (60), où la première roue de transport (14) est une roue de transport de gaz pour transporter un premier médium gazeux, et où la deuxième roue de transport(16) est une roue de transport de liquide pour transporter un deuxième médium liquide, et où la deuxième roue de transport(16) est couplée avec le moteur d'entraînement (12) par le dispositif de couplage magnétique (60),
**caractérisé en ce que**
en association à la première roue de transport (14), un canal de transport (28) s'étendant en forme d'anneau autour du premier axe de rotation (A) et ouvert dans la direction du premier axe de rotation (A), est prévu dans un premier boîtier (22), avec une sortie de médium séparée d'une entrée de médium par une zone d'interrupteur, et **en ce que** la première roue de transport (14) comprend une zone de transport annulaire (30) recouvrant axialement le canal de transport (28) avec une pluralité de lames de transport (32) qui se suivent dans la direction circonférentielle autour du premier axe de rotation (A),
et
**en ce que** la deuxième roue de transport (16) est supportée en rotation autour du deuxième axe de rotation (A) dans un canal d'écoulement (40) pour le deuxième médium, le canal d'écoulement (40) présentant une zone de canal d'alimentation (46) menant vers la deuxième roue de transport (16) essentiellement dans la direction du deuxième axe de rotation (A) et une zone de canal de décharge (50) partant de la deuxième roue de transport (16) dans la direction radiale.

2. Agencement de transport selon la revendication 1, **caractérisé en ce que** la première roue de transport (14) est disposée dans une section spatiale (38) entourée par un deuxième boîtier (36), où de préférence le deuxième boîtier (36) est relié en permanence au premier boîtier (22) pour assurer une fermeture étanche, ou/et en ce qu'un tourillon de palier (58) s'étendant dans la direction du deuxième axe de rotation (A) est prévu pour la deuxième roue de transport (16) dans le canal d'écoulement (40), où de préférence le tourillon de palier (58) est porté sur le deuxième boîtier (36) de sorte qu'il ne puisse tourner autour du deuxième axe de rotation (A) et qu'il supporte en rotation la deuxième roue de transport (16) de préférence sur le deuxième boîtier (36).

3. Agencement de transport selon une des revendications précédentes, **caractérisé en ce que** le moteur d'entraînement (12) comprend un agencement de rotor (18) avec un arbre de rotor (20), et **en ce que** la première roue de transport (14) est couplée mécaniquement avec l'arbre de rotor (20), et **en ce que** la deuxième roue de transport (16) est couplée avec l'arbre de rotor (20) via l'agencement de couplage magnétique (60).

4. Agencement de transport selon une des revendications précédentes **caractérisé en ce que** le moteur d'entraînement (12) comprend un agencement de rotor (18) avec un arbre de rotor (20), et **en ce que** l'agencement d'accouplement magnétique (60) comprend un agencement magnétique d'entraînement (62) couplé mécaniquement avec l'arbre de rotor (20) et un agencement magnétique entraîné (66) couplé avec ladite au moins une roue de transport (16) couplé avec le moteur d'entraînement (12) via l'agencement de couplage magnétique (60).

5. Agencement de transport selon la revendication 4, **caractérisé en ce que** le dispositif magnétique d'entraînement (62) comprend au moins un aimant permanent, ou/et que l'agencement magnétique entraîné (60) comprend au moins un aimant permanent.

6. Agencement de transport selon la revendication 4 ou 5, **caractérisé en ce que** l'agencement magnétique d'entraînement (62) est relié à l'arbre de rotor (20) de manière non-rotative.

7. Agencement de transport selon la revendication 4 ou 5, **caractérisé en ce que** l'agencement magnétique d'entraînement (62) est couplé à l'arbre de rotor (20) via un agencement de transmission (68).

8. Agencement de transport selon la revendication 7, **caractérisé en ce que** l'agencement de transmission (68) comprend un engrenage planétaire (70), de préférence avec une roue solaire (72) reliée à l'arbre de rotor (20) pour une rotation commune, un support de roues planétaires (80) qui est relié à l'agencement magnétique d'entraînement (62) pour la rotation commune ou qui est prévue par l'agencement magnétique d'entraînement (62), avec une pluralité de roues planétaires (78) en prise avec la roue solaire (72), et avec une roue creuse qui ne peut pas tourner autour des premier et deuxième axes de rotation (A), et qui est en prise avec les roues planétaires (78).

9. Agencement de transport selon les revendications 2 et 8, **caractérisé en ce que** la roue creuse (76) est prévue sur le deuxième boîtier (36).

10. Agencement de transport selon l'une des revendications précédentes, **caractérisé en ce que** le premier axe de rotation (A) correspond au deuxième axe de rotation (A), ou/et **en ce que** le moteur d'entraînement (12) est un moteur électrique avec un agencement de stator et avec un agencement de rotor (18) avec un arbre rotor (20).

11. Système d'entraînement pour un véhicule, comprenant une unité d'entraînement (84), un circuit de médium de refroidissement (86) pour guider le médium liquide de refroidissement à travers l'unité d'entraînement (84) et un dispositif de chauffage de véhicule fonctionnant au carburant (92) avec un agencement de transport (10) selon une des revendications précédentes, où la deuxième roue de transport (16) est prévue pour transporter un médium de refroidissement du circuit de médium de refroidissement (86) en tant que deuxième médium à un agencement d'échangeur de chaleur (96) du dispositif de chauffage de véhicule (92), et où la première roue de transport (14) est prévue pour délivrer de l'air de combustion (L) comme premier médium à une région de brûleur (94) du dispositif de chauffage de véhicule (92).
